# EUROPEAN PATENT APPLICATION

(11) **EP 3 427 996 A1**
(43) Date of publication of application: **16.01.2019**
(21) Application number: 18182323.8
(22) Date of filing: 06.07.2018
(51) Int. Cl.: B60L 3/00, B60R 21/013, G08B 25/14, G08B 29/18, H02J 9/06

(54) **TEMPORARY POWER MANAGEMENT FOR A TELEMATICS CONTROL UNIT**

(30) Priority: 06.07.2017 US 201715643065
(71) Applicant: Visteon Global Technologies, Inc., Van Buren Township, MI 48111-5711 (US)
(72) Inventor: Macks, Harold R, Van Buren Township, MI Michigan (US); Moyles, Thomas P, Van Buren Township, MI Michigan (US)
(74) Representative: Dummett Copp LLP

(57) **Abstract**

Methods, systems, and circuits are provided that allow temporary power management of a telematics control unit (TCU). Employing the aspects disclosed herein, a TCU may handle temporary losses of power from a main battery of a vehicle, without overly drawing power from a backup battery (BUB) system. The aspects disclosed herein may be implemented through the addition of circuit elements as well as logic changes to existing TCU systems.

## Description

### Background

Vehicles are traditionally provided with an electrical power source to power the electronic components, referred to as an automotive battery. An automotive battery is a rechargeable battery that supplies electrical energy to a motor vehicle. These batteries are also called starting-lighting-ignition (SLI) batteries. If the vehicle is in an operation of running, the power for the car may be supplied via an alternator.

Vehicles may be provided with certain emergency functions. One such function is the emergency call (Ecall) system. Ecall systems automatically allow a vehicle's telematics system (telematics control unit (TCU)) to call an emergency service provider / first responder, such as the police or fire department.

Thus, if the vehicle is in an accident, the Ecall system automatically instigates a call to one of the predefined dispatch services. The Ecall system sends a control signal to the TCU, and subsequently, the TCU uses a built-in telephony system to contact the designated emergency contact.

Because the emergency dictating the need to employ an Ecall system may also render use of the automotive battery as either not possible or unsafe, Ecall systems are provided with backup battery power to serve any power needs when access to the battery is denied or limited.

However, power interruptions are common in vehicle applications. For example, the wiring harness may temporarily create an open circuit, or large draws of power from other vehicle systems may temporarily render the main power source as unavailable.

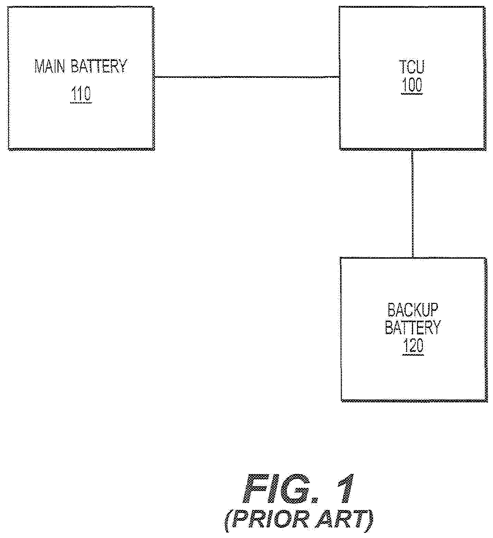

FIG. 1 illustrates a prior art implementation of power management for a TCU 100.

As shown, the TCU 100 is electrically coupled to the battery 110 and a backup battery (BUB) 120. The battery 110, during normal vehicle operations, is configured to be the main supplier of power to the TCU 100.

When the battery 110 is detected as not connected, the backup battery 120 supplies power. However, as noted above, several situations cause the backup battery 120 to erroneously be relied upon. For example, bumps in the road may cause the battery 110 to be temporarily disconnected. In other situations, large loads attached to the battery 110 may also create inadequate supplies to the TCU 100.

In those situations, the backup battery 120 is then relied upon to supply power to the TCU 100. However, due to the conditions listed above, the backup battery 120 may be relied upon excessively, with this reliance resulting in an excess power drawn from the backup battery 120, thereby ensuring that the backup battery 120 is at a power level that is incapable of providing power during an Ecall scenario.

### Summary

According to the invention, there is provided a power management system for the temporary management of electrical power provided to a telematics control unit (TCU) of a vehicle during an emergency situation following a crash of the vehicle, the power management system comprising a telematics control unit (TCU);
a main battery for providing a main source of power to the TCU;
a backup battery for providing temporary power to the TCU when power from the main battery is unavailable or insufficient to power the TCU;
a crash detect sensor for detecting a crash of a vehicle;
a backup battery power control switch for controlling the supply of power from the backup battery;
a power storage capacitor electrically coupled to a TCU load; and
a microprocessor, the microprocessor being coupled to: (i) the backup battery power control switch by a backup battery ON/OFF control output from the microprocessor; (ii) the crash detect sensor by a crash detect sensor input to the microprocessor;
wherein the microprocessor is configured to execute a program of instructions, the program of instructions comprising the following steps:
in a normal operation when power from the main battery is available and sufficient to power the TCU, using the main battery to charge the power storage capacitor;
in response to power from the main battery being unavailable or insufficient to power the TCU and, subsequently, in response to receiving at the crash detect sensor input an indication from the crash detect sensor of a crash of the vehicle, using the backup battery ON/OFF control output to control the backup battery power switch to allow power from the backup battery, thereby electrically coupling the TCU load with the backup battery to provide temporary backup power to the TCU so that the TCU remains powered during said emergency situation following said crash of the vehicle.

By electrically coupling the TCU load with the backup battery it is then possible to provide temporary backup power to the TCU so that the TCU remains powered during an emergency situation, for example to make an Ecall.

The following description relates to system, methods, and circuits related to power management for an emergency call (Ecall) system in a vehicle. Exemplary embodiments may also be directed to any of the system, the method, or an application provided and incorporated into a vehicle-based electronic implementation.

Additional features of the invention will be set forth in the description which follows, and in part will be apparent from the description, or may be learned by practice of the invention.

It is to be understood that both the foregoing general description and the following detailed description are exemplary and explanatory and are intended to provide further explanation of the invention as claimed. Other features and aspects will be apparent from the following detailed description, the drawings, and the claims.

### Description of the Drawings

The invention will now be further described, by way of example only, and with reference to the accompanying drawings, in which like numerals refer to like items, and in which:
FIG. 1 illustrates a prior art implementation of a system from providing backup power for a TCU;
FIGS. 2A and 2B illustrate a system for providing power management for a TCU;
FIG. 3 illustrates a flowchart of a method for providing the logic for the microprocessor of FIGS. 2A and 2B;
FIG. 4A illustrates a first example graph of the waveforms generated with the systems shown in FIGS. 2A and 2B in a first mode of operation; and
FIG. 4B illustrates a second example graph of the waveforms generated with the systems shown in FIGS. 2A and 2B in a second mode of operation.

### Detailed Description

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

Vehicle electronics are commonly being incorporated with a telematics control unit (TCU). The vehicle TCU allows communication to external parties, through employment of any electronic-based communication techniques known.

The TCU may be implemented with Ecall technology. Ecall technology automatically notifies an interested party (for example, a first responder) in situations where a detected crash occurs.

Existing TCU systems are implemented with back-up batteries (BUB). The backup battery provides a finite amount of voltage/energy to supply to the TCU system in situations where the main battery is no longer able to supply power. However, because existing vehicle electronic systems experience false disconnections with the main battery, the backup battery is often relied upon and power is drawn. This leads to situations where the backup battery is depleted, and essentially, not usable during real emergency situations.

Disclosed herein are systems, methods, and electronic circuits provided for a temporary management of power for a telematics control unit. Thus, by employing the aspects disclosed herein, a vehicle's electronic system may handle temporary losses of power without depleting a backup battery system.

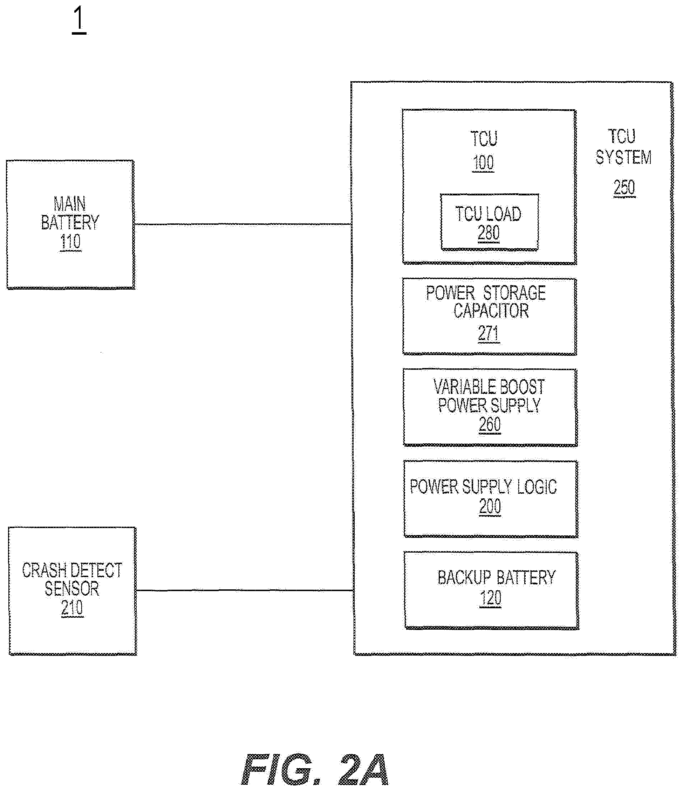

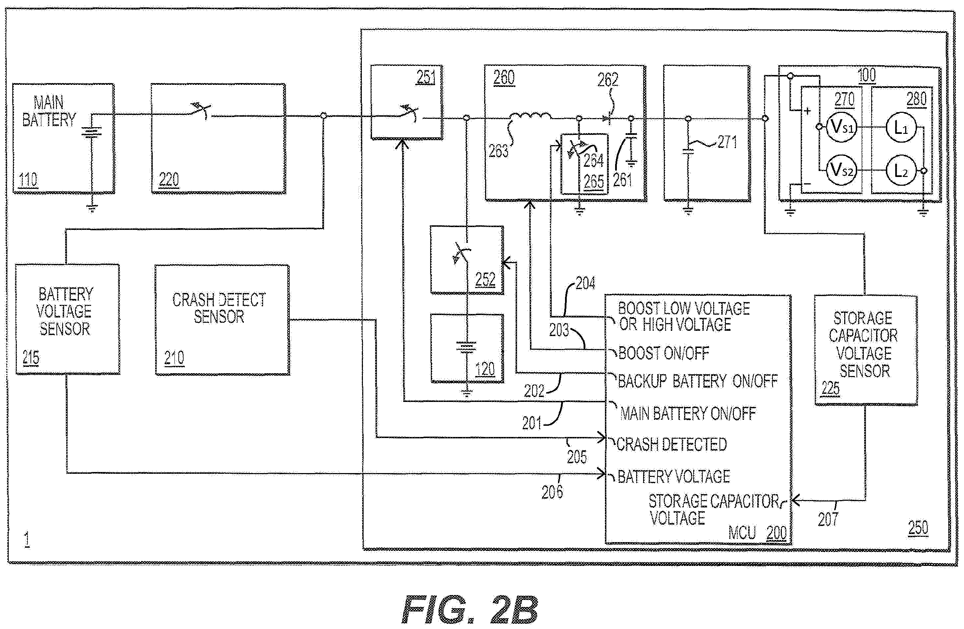

FIGS. 2A and 2B illustrate an example of a power management system 1 for providing power to a telematics control unit (TCU) 100 of a vehicle. The power management system 1 comprises a main battery 110 for supplying power to the vehicle (not shown), a crash detect sensor 210 for detecting a crash of the vehicle, and a telematics control unit 100 and other associated components which are schematically grouped in the drawings and referred to herein as a TCU system 250 employing the aspects disclosed herein. FIG. 2A is a high-level system diagram of the various components of the power management system 1, and FIG. 2B is a circuit-level diagram of a sample implementation of FIG. 2A.

All the elements shown in FIG. 1 are incorporated into FIGS. 2A and 2B, and thus, a description of these elements will be omitted. The backup battery 120 may be integrated into the TCU system 250, or provided separately (as shown in FIG. 1), but in any event is a part of the power management system 1. The TCU 100, and any other devices which consume electrical power, usually referred to as "electrical consumers", will present an electrical load 280 of the power management system. In the drawings, this electrical load 280 is, for convenience only, is illustrated as being within the TCU 100, however, it is to be appreciated that included in this electrical load will be the electrical load of all components associated with the operation of the TCU, for example control logic, or other components which must be kept powered in order for the TCU to function. For convenience therefore, this electrical load 280 will therefore be referred to herein as a "TCU load".

Also additionally shown is a power interruption switch 220 (this may be an actual switch such as a transistor, or this may be a schematic representation of any condition in which the main battery 110 is disconnected or interrupted). Thus, the power interruption switch 220 may be controlled from a vehicle-based controller (not shown), or may represent a situation in which the wire harness connecting the main battery 110 to the TCU system 250 is disconnected.

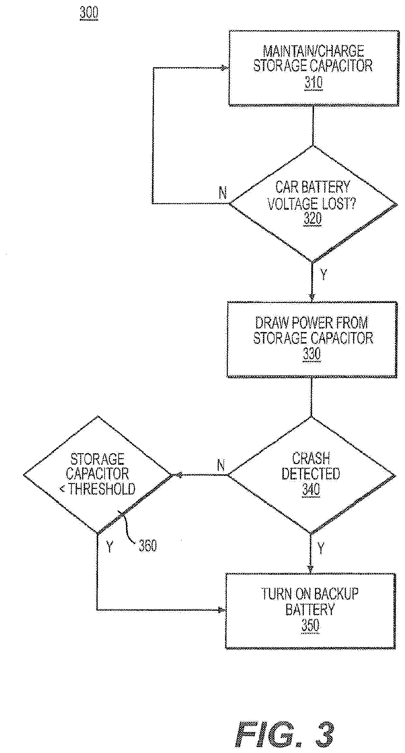

A step-up, or "boost", converter logic 200 element is shown as integrated into the TCU system 250. The boost converter logic 200 is a microprocessor (also referred to as a "microprocessor control unit" (MCU)), such as those commonly provided in the art, configured with the instructions described in FIG. 3. The microprocessor 200 includes inputs/outputs including: a main battery ON/OFF control output 201; a backup battery ON/OFF control output 202; a step-up, or "boost", converter circuit ON/OFF control output 203; and a step-up, or "boost", converter control output 204 that controls whether the variable boost converter circuit is operating to generate a low voltage or high voltage. Also shown is a crash detect sensor input 205 to the microprocessor 200 from the crash detect sensor 210, a main battery voltage input 206 to the microprocessor 200 from a main battery voltage sensor 215 which measures the actual voltage available from the main battery 110 and a storage capacitor voltage input 207 to the microprocessor 200 from a storage capacitor voltage sensor 225 which measures the actual voltage available from a power storage capacitor 271.

The crash detect sensor 210 is an electronic sensor that determines whether the vehicle has undergone an emergency situation requiring the TCU 100 to generate an Ecall. The crash detect sensor 210 may be equipped with a system to detect whether the vehicle has been in a crash, or merely just propagate an indication from another system (for example, an airbag deployment system).

The outputs 201-204 control various elements such as those shown in FIG. 2B. The battery ON/OFF 201 signal controls a main battery power control switch 251. If the main battery power control switch 251 is controlled to be off, power is no longer being drawing from the main battery 110.

The backup battery ON/OFF 202 signal controls a backup battery power control switch 252. In an off state of the backup battery control switch, the backup battery 120 is not connected to power the TCU load 280. In an on state of the backup battery control switch, the backup battery 120 is connected, and is subsequently powering the TCU load 280, which is illustrated schematically in FIG. 2B.

The TCU load 280 represents the electrical load consumed by circuits required to implement a telematics function according to those conventionally employed, and also includes any other associated loads, such as that of control logic employed to implement an Ecall system. Thus, power being delivered to the TCU load 280 is effectively employed to operate the TCU system 250.

Boost ON/OFF 203 and the boost converter low V/high V control output 204 controls a DC/DC step-up, or "boost", converter 260 to generate voltages used to power the telematics control unit 100. The DC/DC step-up converter 260 steps up voltage (while stepping down current) from its input (battery supply) to its output (the power supply to the TCU) and may be either an inductive converter or a capacitive converter. In the illustrated example, the DC/DC step-up converter is an inductive step-up converter, referred to hereinafter as a variable boost converter 260. The variable boost converter 260 allows the voltage being supplied to power the TCU load 280 to be either at high voltage state or a low voltage state (controlled by boost converter low V/high V control output 204). Power from the variable boost converter 260 to the telematics control unit 100 is switched on and off by a signal from the boost ON/OFF 203 control output.

The variable boost converter 260 may, optionally, comprise an output on its output a smoothing capacitor 261.

The variable boost converter 260 allows for voltage from the main battery 110 to be bumped up to a voltage high enough to supply at least one power supply 270 in between the storage capacitor 271 and the TCU load 280. The variable boost converter 260 includes an inductor 263, and a blocking diode 262 the forward output of which is connected to the power storage capacitor 271. Optionally, the variable boost converter may have the capacitor 261 which may provide some high frequency ripple suppression. The capacitance of this smoothing capacitor is relatively small as compared with the capacitance of the power storage capacitor 271, and as the capacitances of these two in-parallel capacitors add together, the capacitor 261 of the variable boost converter may be omitted.

In this example, the inductor 263 has an inductance of 10 µH.

A switch 264 is connected to a node between the inductor 263 and blocking diode 262 which shorts the node to ground when closed. The switch 264 is controlled by a boost control integrated circuit (IC) 265 which receives a logic signal on control output 204 from the microprocessor 200 that controls opening and closing of the switch 264 to maintain the proper boost output voltage, either high or low as dictated by the boost converter control output 204.

When the switch 264 is closed, current flows through the inductor 263 towards ground and the inductor stores some of the energy in the current by building up a magnetic field. When the switch 264 is opened, current through the inductor will suddenly be reduced owing to the higher impedance of the circuit. The magnetic field previously created will be destroyed to maintain the current in the same direction, which is towards the diode 262, power storage capacitor 271 and the TCU load 280. The battery voltage and the voltage generated by the collapse of the magnetic field are then in series, causing a higher voltage to charge the power storage capacitor 271 through the blocking diode 262.

When the switch 264 is closed, the blocking diode 262 prevents the power storage capacitor 271 from discharging through the switch 264 towards ground.

If the switch 264 is opened and closed at a high enough frequency, then the inductor 263 will not discharge fully in between charging stages, and the TCU load 280 will always see a voltage greater than that of the input battery source alone when the switch is opened. Also while the switch is opened, the power storage capacitor 271 in parallel with the TCU load 280 is charged to this combined voltage. When the switch 264 is then closed, the blocking diode 262 isolates the output of the variable boost converter and the power storage capacitor 271 continues to provide the voltage and energy to the TCU load 280. The switch 264 is opened again before the power storage capacitor 271 discharges too much, so a higher current drain from the power storage capacitor will in general require a higher cycling frequency of the switch 264.

The amount of voltage boost is controlled by varying the closed/open duty cycle of the switch, with a lower closed/open duty cycling resulting in a lower voltage boost.

The output from the variable boost converter 260 does not directly supply power to power consuming components of the TCU system 250, which in general will be semiconductor based circuits, including the microprocessor 200. Instead, the output from the output from the variable boost converter 260 is supplied to the power supply 270, and optionally one or more further power supplies (not illustrated), which regulates the input power at a relatively high input voltage from the storage capacitor 271 to at least one relatively lower output voltage. In this example, there is one power supply 270 which provides two regulated sources of electrical power at two DC voltages V_{S1} and V_{S2}. In this example, V_{S2} is at 3.8 Volts and V_{S2} is at 5 Volts. These DC supplies are then directly used to provide electrical power to electrical consumers, or loads, of the TCU system 250, labelled schematically in FIG. 2B as L1 and L2, the sum of which plus power consumed by power supply 270, is the collective load referred to herein as the TCU load 280.

The electrical energy stored by the storage capacitor 271 therefore provides a buffer that continues to supply electrical power to the power supply 270 in the event of a momentary interruption of power from the main battery 110, or in the event of a more prolonged interruption up until the backup battery can be switched in to provide temporary power to the TCU 100 in order to maintain telematics communication with an external wireless transceiver, for example a cellular base station. In this example, the capacitor 271 has a rating of 2700 µF.

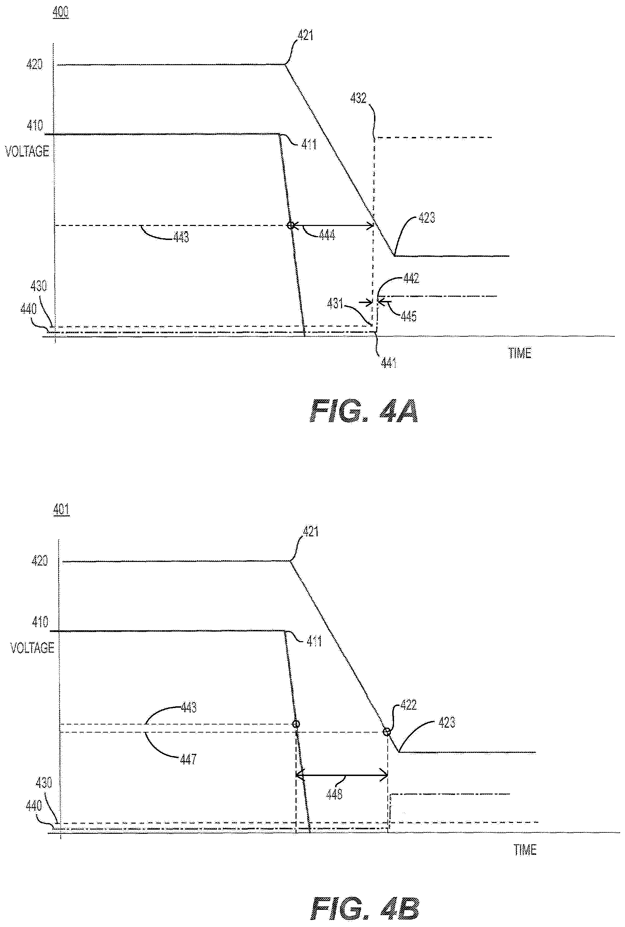

The operation of the boost logic 200, according to the aspects disclosed herein will be described with the flowchart 300 of FIG. 3, and sample sets of waveforms on the graphs 400, 401 shown in FIGS. 4A, and 4B.

In operation 310, the power storage capacitor 271 is charged while the TCU load 280 is being supplied power from the main battery 110. Thus, the power interruption and main battery power control switches 220, 251 are both closed, while the backup battery power control switch 252 is open.

In the graphs 400, 401 of FIGS. 4A and 4B, a storage capacitor voltage 420 as detected by the storage capacitor voltage sensor 225 is initially steady at 18 Volts, while an available main battery voltage 410 as detected by the main battery voltage sensor 215 remains at a steady voltage which, for a 12 Volt battery may for example be 13.6 Volts. In practice, this main battery voltage may fluctuate between about 9 Volts and 16 Volts in a motor vehicle. At a point 411 the detected available main battery voltage 410 transitions from the nominal full voltage to 0 Volts. This transition may be relatively rapid, for example 10 ms to 20 ms. To the right of point 411, power is effectively no longer available from the main battery 110.

The available main battery voltage is monitored by the microprocessor 200 using the signal from the voltage sensor 215 provided at the battery voltage input 206 and in operation 320, a determination is made by the microprocessor 200 as to whether the available main battery voltage as detected by the main battery voltage sensor 215 has dropped below a predetermined threshold voltage 443, indicating that main battery power is lost (for the reasons explained above). The predetermined threshold voltage 443 is below the normal range of fluctuation for the main battery voltage (9 Volts) and above a minimum voltage for which the variable boost converter is capable of provide boosting the input voltage to 18 Volts, which in this example is about 7 Volts. In this example, the threshold 443 is set at about 8 Volts.

If the determination is yes, i.e. the main battery voltage has dropped below the threshold 443, then the microprocessor 200 acts to switch off the main battery on/off switch 251 and optionally also to temporarily stop oscillation of the switch 264, as there is no input current to boost. Power will then automatically be drawn 330 from the storage capacitor 271 owing to the loss of input current through the inductor 263 of the variable boost converter 260. If the determination is no, then the power storage capacitor 271 will continue to be fully charged, and the method 300 stays at the state described in operation 310.

In operation 330, power is automatically drawn from the power storage capacitor 271 by the regulated power supply 270, which itself continues to provide power at steady voltages (V_{S1}, V_{S2}) to the load (L₁ , L₂) 280. The voltage of the storage capacitor then begins to steadily decline from the fully charged voltage 420, as shown to the right of a transition point 421 in FIGS. 4A and 4B, and a measurement of this decline is provided by the storage capacitor voltage sensor 225 to the microprocessor 200. In this instance, the power interruption switch 220 is presumed to be open (or the main battery 110 is shut off). The microprocessor 200 uses the main battery ON/OFF control output 201 to cause the main battery power control switch 251 to transition from a state of closed to open, so that when temporary power is subsequently supplied from the backup battery 120 to the variable boost converter 260, this is isolated from the rest of the vehicle main battery power supply system.

As the power storage capacitor 271 is drawn upon, the voltage gets reduced accordingly. The variable boost converter 262 is configured in the high voltage state (for example 18 Volts) when vehicle battery 110 is present (for example 12 Volts) to store far greater energy in the power storage capacitor 271 according to the capacitor energy equation energy = ½ x C x V^2. Raising the voltage on the power storage capacitor 271 allows for a much longer time that the power storage capacitor can power the TCU 100 when the main battery 110 is not present and the backup battery 120 has not yet been turned on. If the capacitance of the storage capacitor is 2700 µF, then at 18 Volts, the capacitor 271 stores about 0.44 Joules of energy. Higher voltages may, however, be employed with suitable design of circuit elements. For example, if the higher voltage is 30 Volts, then the same energy storage capacity can be obtained with a 1000 µF capacitor, which would reduce the cost of this component, and also the space required by such a discrete circuit component.

In operation 340, and up until a maximum allowed predetermined time 444 following the determination 320 that the main battery has been lost (this time being less than the amount of time the voltage of the power storage capacitor 271 is sufficient to power the power supply 270 and TCU 100), a determination is made by the microprocessor 200 from a signal from the crash detect sensor 210 at the crash detect input 205, as to whether a crash has been detected. In this example, the maximum time 444 is 100 ms, and FIG. 4A shows this determination being made at this maximum time. In practice, the determination may be made much sooner, for example after 10 ms or 50 ms.

In any event, as soon as a crash has been determined by the microprocessor 200, in operation 350 the backup battery 120 is activated by the microprocessor 200 with a backup battery signal 440 to supply the TCU load 280 in response to a signal on the backup battery ON/OFF output 202 to the backup battery power control switch 252 causing this to close. At this juncture, the microprocessor controls the duty cycle and/or frequency of the oscillating switch 264 of the variable boost converter 260, so that the output of the variable boost converter is switched from supplying high voltage to low voltage. The microprocessor makes this change by changing the logic state of the boost converter control output 204 (for example, from a logic zero to one), this logic signal being used as an input by the switch IC 265 which then controls the operation of the oscillating switch 264. The storage capacitor voltage then transitions to the low voltage level of 7 volts at point 423 in FIG. 4A. The low voltage is sufficient to power the power supply 270, without unnecessarily storing excess voltage and energy on the storage capacitor 271. Operating the variable boost converter at a lower output voltage (which in this example is 7 Volts) therefore improves the efficiency of the variable boost converter 260 and extends the time the TCU system 250 can be powered by the backup battery 120 before the backup battery runs out of power.

If the main battery voltage is restored (rises above the threshold voltage 443) before the maximum time of 100 ms has been reached, then the microprocessor 200 detects this and does not activates the backup battery signal 440. Instead, the microprocessor closes the main battery ON/OFF switch 251 to restore power from the main battery to the variable boost converter 260.

On the other hand, if the maximum time of 100 ms has been reached without a crash being detected, then the microprocessor 200 will switch the backup battery to provide power to the variable boost power supply 260.

The TCU system 250 also accommodates a failure mode, illustrated in FIG. 4B. This failure mode may result over time with aging of the storage capacitor 271. Aged capacitors may experience a drop in the actual capacitance value, which in the illustrated example would cause the storage capacitor to discharge more quickly in the event of loss of input power form the main battery. In this case, it is possible that the storage capacitor voltage may drop below 6 Volts within the threshold time of 100 ms. In this case a problem arises in that the inrush current to the variable boost converter may be excessive, in order to raise the output voltage up to low level value of 7 Volts. A drop below 6 Volts will also cause the voltages to drop at the outputs of the power supply 270, which may result in loss of functionality of active components of the TCU system 250. Therefore, to guard against this, the microprocessor 200 also monitors the storage capacitor voltage against a second predetermined threshold 447 voltage of 7 Volts, as shown in FIG. 4B, and if this threshold is reached within a time 448 less than the maximum allowed predetermined time 444, as shown at point 422 of FIG. 2B, then the microprocessor 200 activates the backup battery signal 440.

In operation 340, after the first predetermined time 444, if the crash detect sensor 210 detects the occurrence of a crash then, as shown in graph 400, a crash detect signal 430 provided to the microprocessor 200 on the crash detect sensor input 205 transitions from a low level 431 to a high level 432 (from a state of no indication to on). Accordingly, the backup battery signal 440 provided from the microprocessor 200 on the backup battery ON/OFF control output 202 transitions from a low level 441 to a high level 442 so that the backup battery ON/OFF switch 252 is also asserted on. This occurs as soon as possible, after a second predetermined time 445, preferably less than 5 ms.

If no crash is detected, as shown in FIG. 4B, the method 300 proceeds to operation 360, and as shown in FIG. 4B the backup battery 120 is not turned on until the detected voltage on the power storage capacitor 271 has declined to the second predetermined threshold 447, after which, the backup battery 120 is turned on (as done in operation 350).

Thus the variable boost converter 260 therefore solves several issues:
1) For a momentary loss of the main battery 110 the high voltage state of the variable boost converter 260 allows for operation of the TCU 100 without having to draw energy from the backup battery 120, when the main battery power loss proves to be temporary (for example 50 ms). During this time an ongoing (non-emergency) wireless communication from the TCU may be maintained.
2) When the loss of power from the main battery 110 is promptly followed by the detection of a crash (i.e. within a delay of up to 100 ms), the microprocessor 200 disconnects the variable boost converter 260 from the main battery power supply system, in anticipation of switching to the backup battery supply, while the TCU system 250 continues to be temporarily powered from the energy stored in the storage capacitor 271, and then promptly, with minimal delay, switches to the backup battery supply as soon as the crash situation is confirmed.
3) When the loss of power from the main battery is sufficiently prolonged, but no crash has been detected, and the TCU 100 must be run off the backup battery 120, the low voltage state of the variable boost converter 260 improves the boost efficiency and extends the time the TCU can run off the backup battery.
4) In the event that the performance of the storage capacitor 271 is degraded, for example by age, such that it cannot power the TCU 100 for the minimum predetermined time 444, then the capacitor voltage is monitored by the microprocessor 200 and the backup battery is activated to power the variable boost converter before the voltage of the storage capacitor drops so low that an excessive current demand would be placed on the backup battery.

In this example, the backup battery 120, at the start of its life, has voltage of 6 Volts.

The variable boost supply 260 is capable of boosting the voltage from this battery to 7 Volts, up until the backup battery voltage has declined to 1½ Volts.

Although the backup battery 120 may be rechargeable, it is preferred that the backup battery 120 is a non-rechargeable battery. This avoids unnecessary cost associated with components needed to top up the charge on the battery. Because the invention avoids unnecessary use of the backup battery, the backup battery can last for the expected service life of the vehicle.

Thus, employing the aspects disclosed herein, a vehicle-electronics provider may implement a TCU system 250 that is able to address temporary losses of power, while still maintaining a backup battery 120 for use when required.

Certain of the devices shown include a computing system (for example the boost logic 200). The computing system includes a processor (CPU) and a system bus that couples various system components including a system memory such as read only memory (ROM) and random access memory (RAM), to the processor. Other system memory may be available for use as well. The computing system may include more than one processor or a group or cluster of computing system networked together to provide greater processing capability. The system bus may be any of several types of bus structures including a memory bus or memory controller, a peripheral bus, and a local bus using any of a variety of bus architectures. A basic input/output (BIOS) stored in the ROM or the like, may provide basic routines that help to transfer information between elements within the computing system, such as during start-up. The computing system further includes data stores, which maintain a database according to known database management systems. The data stores may be embodied in many forms, such as a hard disk drive, a magnetic disk drive, an optical disk drive, tape drive, or another type of computer readable media which can store data that are accessible by the processor, such as magnetic cassettes, flash memory cards, digital versatile disks, cartridges, random access memories (RAMs) and, read only memory (ROM). The data stores may be connected to the system bus by a drive interface. The data stores provide non-volatile storage of computer readable instructions, data structures, program modules and other data for the computing system.

To enable human (and in some instances, machine) user interaction, the computing system may include an input device, such as a microphone for speech and audio, a touch sensitive screen for gesture or graphical input, keyboard, mouse, motion input, and so forth. An output device can include one or more of a number of output mechanisms. In some instances, multimodal systems enable a user to provide multiple types of input to communicate with the computing system. A communications interface generally enables the computing device system to communicate with one or more other computing devices using various communication and network protocols.

The preceding disclosure refers to a number of flow charts and accompanying descriptions to illustrate the embodiments represented in FIG. 3. The disclosed devices, components, and systems contemplate using or implementing any suitable technique for performing the steps illustrated in these figures. Thus, FIG. 3 is for illustration purposes only and the described or similar steps may be performed at any appropriate time, including concurrently, individually, or in combination. In addition, many of the steps in these flow charts may take place simultaneously and/or in different orders than as shown and described. Moreover, the disclosed systems may use processes and methods with additional, fewer, and/or different steps.

Embodiments disclosed herein can be implemented in digital electronic circuitry, or in computer software, firmware, or hardware, including the herein disclosed structures and their equivalents. Some embodiments can be implemented as one or more computer programs, i.e., one or more modules of computer program instructions, encoded on a tangible computer storage medium for execution by one or more processors. A computer storage medium can be, or can be included in, a computer-readable storage device, a computer-readable storage substrate, or a random or serial access memory. The computer storage medium can also be, or can be included in, one or more separate tangible components or media such as multiple CDs, disks, or other storage devices. The computer storage medium does not include a transitory signal.

As used herein, the term processor encompasses all kinds of apparatus, devices, and machines for processing data, including by way of example a programmable processor, a computer, a system on a chip, or multiple ones, or combinations, of the foregoing. The processor can include special purpose logic circuitry, e.g., an FPGA (field programmable gate array) or an ASIC (application-specific integrated circuit). The processor also can include, in addition to hardware, code that creates an execution environment for the computer program in question, e.g., code that constitutes processor firmware, a protocol stack, a database management system, an operating system, a cross-platform runtime environment, a virtual machine, or a combination of one or more of them.

A computer program (also known as a program, module, engine, software, software application, script, or code) can be written in any form of programming language, including compiled or interpreted languages, declarative or procedural languages, and the program can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

To provide for interaction with an individual, the herein disclosed embodiments can be implemented using an interactive display, such as a graphical user interface (GUI). Such GUI's may include interactive features such as pop-up or pull-down menus or lists, selection tabs, scannable features, and other features that can receive human inputs.

The computing system disclosed herein can include clients and servers. A client and server are generally remote from each other and typically interact through a communications network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

It will be apparent to those skilled in the art that various modifications and variation can be made in the present invention without departing from the scope of the invention. Thus, it is intended that the present invention cover the modifications and variations of this invention provided they come within the scope of the appended claims and their equivalents.

## Claims

1. A power management system (1) for the temporary management of electrical power provided to a telematics control unit (TCU) of a vehicle during an emergency situation following a crash of the vehicle, the power management system comprising a telematics control unit (TCU);
a main battery (110) for providing a main source of power to the TCU (100);
a backup battery (120) for providing temporary power to the TCU (100) when power from the main battery is unavailable or insufficient to power the TCU;
a crash detect sensor (210) for detecting a crash of a vehicle;
a backup battery power control switch (252) for controlling the supply of power from the backup battery (120);
a power storage capacitor (271) electrically coupled to a TCU load (280); and
a microprocessor (200), the microprocessor being coupled to: (i) the backup battery power control switch (252) by a backup battery ON/OFF control output (202) from the microprocessor (200); (ii) the crash detect sensor (210) by a crash detect sensor input (205) to the microprocessor (200);
wherein the microprocessor is configured to execute a program of instructions, the program of instructions comprising the following steps:
in a normal operation when power from the main battery (110) is available and sufficient to power the TCU (100), using the main battery to charge the power storage capacitor;
in response to power from the main battery (110) being unavailable or insufficient to power the TCU (100) and, subsequently, in response to receiving at the crash detect sensor input (205) an indication from the crash detect sensor of a crash of the vehicle, using the backup battery ON/OFF control output (202) to control the backup battery power switch (252) to allow power from the backup battery, thereby electrically coupling the TCU load with the backup battery to provide temporary backup power to the TCU so that the TCU remains powered during said emergency situation following said crash of the vehicle.

2. The power management system (1) according to claim 1, further comprising:
a DC/DC step-up converter (260), an output of the DC/DC step-up converter being electrically connected to the power storage capacitor (271), and the DC/DC step-up converter under the control of the microprocessor (200) being configured:
(i) to connect an input of the DC/DC step-up converter to the main battery and to generate at said output a first supply voltage for the TCU (100) greater than a supply voltage of the main battery (110) in normal operation when the main battery is available to power the TCU; and
ii) to connect an input of the DC/DC step-up converter to the backup battery and to generate at said output a second supply voltage of the backup battery (120) when the main battery is unavailable or insufficient to power the TCU;
wherein the first supply voltage is greater than the voltage provided by the main battery, the second supply voltage is greater than the voltage provided by the backup battery, and the first supply voltage is greater than the second supply voltage.

3. The power management system (1) according to claim 2, wherein the supply voltage of the main battery (110) is greater than the supply voltage of the backup battery (120) and the microprocessor is coupled to the DC/DC step-up converter by a step-up converter control output (204) for controlling whether the DC/DC step-up converter (260) is operating to generate a first voltage or a second voltage, the first voltage being greater than the supply voltage of the main battery and the second voltage being greater than the supply voltage of the backup battery, and the program of instructions comprising the following steps:
in a normal operation when power from the main battery (110) is available and sufficient to power the TCU (100), using the step-up converter control output (204) to control the DC/DC step-up converter (260) to generate the first voltage, the first voltage being provided to the power storage capacitor (271); and
in response to power from the main battery (110) being unavailable or insufficient to power the TCU (100) and after receiving at the crash detect sensor input (205) an indication from the crash detect sensor of a crash of the vehicle, using the step-up converter control output (204) to control the DC/DC step-up converter (260) to generate the second voltage, the second voltage being provided to the power storage capacitor (271).

4. The power management system (1) according to Claim 3, wherein the program of instructions comprises the step of waiting for a predetermined time while waiting for an indication from the crash detect sensor of a crash of the vehicle, and if said predetermined time is exceeded without a crash having been detected, then using the step-up converter control output (204) to control the DC/DC step-up converter (260) to generate the second voltage, the second voltage being provided to the power storage capacitor (271).

5. The power management system (1) according to any one of Claims 2 to 4, wherein the power management system further comprises a voltage sensor (225) for detecting a voltage of the power storage capacitor (271), the microprocessor (200) being coupled to said voltage sensor (225) by a storage capacitor voltage input (207) to the microprocessor (200), and the program of instructions comprises the steps of:
while waiting for said indication of said crash of the vehicle, receiving at the storage capacitor voltage input a measure of the voltage of the power storage capacitor, and if said measure falls below a first predetermined threshold (447), using the step-up converter control output (204) to control the DC/DC step-up converter (260) to generate the second voltage, the second voltage being provided to the power storage capacitor (271).

6. The power management system according to any preceding claim, wherein the TCU (100) is coupled to an emergency call (Ecall) system.

7. The power management system (1) according to any preceding claim, wherein the power storage capacitor (271) electrically coupled to the TCU load (280) by an intervening power supply, said power supply comprising a power input connected to the power storage capacitor (271) and at least one regulated power supply output electrically connected to electrical consumers of the power management system, said electrical consumers providing the TCU load (280).

8. The power management system (1) according to Claim 7, wherein said electrical consumers comprise the TCU (100) and the microprocessor (200).
